# EUROPÄISCHE PATENTANMELDUNG

(11) **EP 3 128 203 A1**
(43) Veröffentlichungstag der Anmeldung: **08.02.2017**
(21) Anmeldenummer: 16183271.2
(22) Anmeldetag: 08.08.2016
(51) Int. Cl.: F16F 9/32, B32B 5/30

(54) **DÄMPFUNGSELEMENT FÜR LUFTFEDERN**

(30) Priorität: 07.08.2015 DE 102015113023
(71) Anmelder: tremco illbruck Produktion GmbH, 92439 Bodenwöhr (DE)
(72) Erfinder: Komma, Markus, 93133 Burglengenfeld (DE); Pronold, Michael, 92543 Guteneck (DE); Eidenhardt, Thomas, 92436 Bruck (DE)
(74) Vertreter: Bittner, Bernhard

(57) **Zusammenfassung**

Dämpfungselement insbesondere für Luftfedern, mit einem flachen Trägerelement (2), welches sich in einer ersten Richtung (X) und in einer zweiten zu der ersten Richtung (X) senkrecht stehenden Richtung (Y) erstreckt und welches eine erste Oberfläche (2a) und ein zweite Oberfläche (2b) aufweist, wobei die zweite Oberfläche (2b) der ersten Oberfläche (2a) gegenüberliegt, wobei wenigstens eine Oberfläche (2a, 2b) wenigstens abschnittsweise mit einem Klebstoff beschichtet ist. Erfindungsgemäß ist an dieser wenigstens einen mit dem Klebstoff beschichteten Oberfläche (2a, 2b) ein granulatförmiges Material (4) aufgebracht und von dem Klebstoff an der Oberfläche gehalten, wobei dieses granulatförmige Material (4) zur Adsorption und/oder Absorption von Gasen geeignet und bestimmt ist.

## Beschreibung

Die vorliegende Erfindung bezieht sich auf ein Dämpfungselement. Die Erfindung wird unter Bezugnahme auf Luftdämpfer bzw. Luftfedern (allgemein Gasfedern) beschrieben, die beispielsweise in der KFZ-Industrie Anwendung finden können. Hierzu ist es aus dem Stand der Technik bekannt, dass derartige Dämpfersysteme Adsorptionsmaterialien, wie beispielsweise Aktivkohle aufweisen. Diese Aktivkohle ist dabei beispielsweise in einem entsprechenden Raum des Dämpfers angeordnet.

Aus der EP 2 759 733 A1 ist eine Luftfeder mit adsorptivem Material bekannt. Dabei ist in die Drucklufträume der Luftfeder oder des Druckluftspeichers ein adsorptives Material eingebracht. Durch dieses adsorptive Material kann das Luftvolumen in den Drucklufträumen um ein Vielfaches erhöht werden. Die Aufnahme der adsorbierten Gasmoleküle steigt mit dem Anstieg des Drucks. Auf diese Weise kann durch ein Einbringen von adsorptivem Material in die Drucklufträume eine insbesondere weichere Federung erreicht werden.

Problematisch ist hier die Frage, wie dieses Absorptionsmaterial in den Dämpfer eingebracht wird und wie es dabei auch an Ort und Stelle gehalten werden kann.

Aus dem internen Stand der Technik der Anmelderin ist eine Vorgehensweise bekannt, bei der das Dämpfungsmaterial bzw. das Adsorptionsmaterial in einen Schaumstoff eingebracht wird. Allerdings weist diese Vorgehensweise noch den Nachteil auf, dass keine allzu hohe Wirkoberfläche des Dämpfungsmaterials erreicht wird.

Der vorliegenden Erfindung liegt daher die Aufgabe zugrunde, ein entsprechendes Dämpfungselement (welches insbesondere als Adsorptionsmaterial oder Adsorptionseinrichtung wirken kann) zur Verfügung zu stellen, welches eine möglichst große Wirkoberfläche aufweist.

Der vorliegenden Erfindung liegt weiterhin die Aufgabe zugrunde, ein Verfahren zur Verfügung zu stellen, welches ebenfalls die Herstellung eines entsprechenden Dämpfungselements bzw. einer entsprechenden Absorptionseinrichtung erlaubt. Diese Aufgaben werden erfindungsgemäß durch die Gegenstände der unabhängigen Patentansprüche gelöst. Vorteilhafte Ausführungsformen und Weiterbildungen sind Gegenstand der Unteransprüche.

Ein erfindungsgemäßes Dämpfungselement (welches insbesondere als Adsorptionseinrichtung zum Absorbieren von gasförmigen Medien wirken kann) weist ein flaches TrägereleMent auf, welches sich in einer ersten Richtung und in einer zweiten zu der ersten Richtung senkrecht stehenden Richtung erstreckt und welches eine erste Oberfläche und eine zweite Oberfläche aufweist. Dabei liegt die zweite Oberfläche der ersten Oberfläche gegenüber und wenigstens eine dieser Oberflächen ist wenigstens abschnittsweise mit einem Klebstoff beschichtet.

Erfindungsgemäß ist an dieser wenigstens einen mit Klebstoff beschichteten Oberfläche ein granulatförmiges (bzw. granulatartiges) Material aufgebracht und wird von dem Klebstoff an der Oberfläche gehalten. Dabei ist dieses granulatförmige Material zur Adsorption und/oder Absorption von Gasen (insbesondere von Luft) geeignet und bestimmt.

Unter einem Dämpfungselement wird insbesondere ein Element verstanden, welches eine Dämpfungswirkung, insbesondere einer Gasfederungseinrichtung verändert und insbesondere verbessert. Vorteilhaft ist dieses Dämpfungselement in einem Aufnahmeraum und insbesondere einer Druckluftkammer einer Luftfedereinrichtung angeordnet. Vorteilhaft ist dieses Dämpfungselement dabei in einer festen Einbauposition in diesem Aufnahmeraum angeordnet. Dieses Dämpfungselement weist bevorzugt wenigstens einen gasadsorbierenden Abschnitt, insbesondere an den Oberflächen der Granulatkörper auf. Das granulatförmige Material weist bevorzugt eine Vielzahl von Granulatkörpern auf, welche jeweils eine adsorbierende Oberfläche aufweisen.

Im Folgenden wird das unbeschichtete Material (d.h. die reine Folie ohne Klebstoff und ohne Granulat) als Basismaterial oder Substrat bezeichnet. Das nur mit Klebstoff beschichtete Material (ein oder beidseitiges Klebeband) wird im Folgenden als Trägerelement oder bandartiger Träger bezeichnet. Das beschichtete Material, welches zusätzlich mit Granulat versehen ist, wird im Folgenden als Dämpfungsmaterial'oder Dämpfungselement bezeichnet.

Für die Adsorption ist die spezifische (insbesondere innere) Oberfläche (BET) sowie die Porenform und -größe bedeutsam. Die Anzahl der Körper ist hingegen weniger entscheidend. Die Anmelderin hat weiterhin im Rahmen ihre Entwicklungsarbeit ermittelt, dass auch das Verhältnis zwischen spezifischer Oberfläche und Korngröße für die hier gegenständliche Anwendung bedeutend ist. Wenn die Körner zu klein sind, bedeckt eine riesige Menge die Oberfläche des Trägerelements, bietet jedoch absolut nur eine verhältnismäßig kleine spezifische Oberfläche. Zu große Körner können dagegen nicht dicht genug auf der Oberfläche des Trägerelements gepackt werden.

Vorteilhaft weist das Trägerelement eine Dicke auf, die wesentlich geringer ist als die Ausdehnung in den beiden anderen genannten Richtungen. Vorteilhaft ist die Dicke des Materials weniger als ein Zehntel als die Ausdehnung in den beiden Erstreckungseinrichtungen, bevorzugt weniger als ein Zwanzigstel, und besonders bevorzugt weniger als ein Fünfzigstel. Damit handelt es sich bevorzugt bei dem Trägerelement um ein bandartiges Material.

Bei einer weiteren vorteilhaften Ausführungsform ist das Trägerelement bandartig ausgebildet. Dieses Band weist damit die beiden besagten Oberflächen auf, wobei wenigstens eine dieser Oberflächen mit dem Klebstoff und dem Granulat beladen ist. Bevorzugt sind die Oberflächen des Trägerelements eben ausgebildet. Daneben kann bevorzugt das granulatförmige Material bzw. können die einzelnen Körner des granulatförmigen Materials eine gewisse Beweglichkeit gegenüber dem Trägerelement bzw. dessen Oberflächen aufweisen. Daneben weist bevorzugt auch das Trägerelement eine gewisse Flexibilität zumindest entlang seiner (Quer-)Erstreckungsrichtung auf. Bevorzugt ist jedoch das Trägerelement nicht flexibel in seiner Längsrichtung.

Bei einer weiteren vorteilhaften Ausführungsform ist eine Korngröße und/oder ein Durchmesser des Granulats größer als 0,4 mm, bevorzugt größer als 0,6 mm, bevorzugt größer als 0,7 mm und besonders bevorzugt größer als 0,8 mm. Bei einer weiteren vorteilhaften Ausführungsform ist die Korngröße des Granulats kleiner als 3,5 mm, bevorzugt kleiner als 2,1 mm, besonders bevorzugt kleiner als 1,8 mm. Diese Korngrößen haben sich als besonders günstig erwiesen, um einerseits eine stabile Beladung des Bandes zu ermöglichen und andererseits auch, wie unten genauer erläutert wird bei einer Überlagerung mehrerer Schichten eine günstige Adsorption. Vorteilhaft liegt ist ein Verhältnis zwischen einem Korndurchmesser des granulatartigen Materials und der Dicke des bandartigen Trägers bei wenigstens 5: 1, bevorzugt bei wenigstens 6:1, bevorzugt bei wenigstens 7:1. Auf diese Weise kann die aktive Oberfläche des granulatartigen Materials sehr hoch ausgebildet sein.

Vorteilhaft liegt ein spezifisches Gewicht des besagten Granulats zwischen 0,20 g/cm³ und 0,90 g/cm³, bevorzugt zwischen 0,30 g/cm³ und 0,80 g/cm³ und besonders bevorzugt zwischen 0,4 g/cm³ und 0,6 g/cm³. Bevorzugt liegt ein Gesamtgewicht des mit dem Klebstoff beschichteten Trägerelements zwischen 100 g/m² und 200 g/m², bevorzugt zwischen 120 g/m² und 180 g/m² und besonders bevorzugt zwischen 130 g/m² und 170g/m². Vorteilhaft wird als Klebstoff kein niedrigviskoser Klebstoff verwendet, da dieser sich negativ auf die Zugänglichkeit der Poren des Granulats auswirken könnte. Auch sollte kein allzu dicker Klebstoffauftrag verwendet werden.

Bevorzugt ist eine Dicke des Trägerelements größer als 0,05mm, bevorzugt größer als 0,08mm und bevorzugt größer als 0,1 mm. Bevorzugt ist eine Dicke des Trägerelements kleiner als 0,4mm, bevorzugt kleiner als 0,3mm und bevorzugt kleiner als 0,2mm.

Bei einer weiteren vorteilhaften Ausführungsform handelt es sich bei dem Klebstoff um einen Akrylatkleber. Vorteilhaft ist dieser Klebstoff im Wesentlichen vollflächig auf der jeweiligen Oberfläche Basismaterials aufgetragen. Auf diesem Klebstoff ist wiederum das granulatförmige Material aufgetragen. Es wäre jedoch auch denkbar, dass auch der Klebstoff nicht vollflächig sondern nur abschnittsweise, beispielsweise streifenförmig auf dem Basismaterial bzw. Substrat aufgetragen ist. Auf diese Weise kann gewährleistet werden, dass einerseits das granulatförmige Material an der Oberfläche gehalten wird, andererseits, dass das granulatförmige Material eine sehr große Oberfläche zum Absorbieren von gasförmigen Medien aufweist. Bei dem gasförmigen Medium handelt es sich insbesondere um Luft, sodass das hier beschriebene Dämpfungselement beispielsweise in Gasfedern Anwendung finden kann. Bei einer weiteren vorteilhaften Ausführungsform ist auch die andere Oberfläche des Basismaterials wenigstens abschnittsweise mit einem Klebstoff beschichtet und an dieser mit dem Klebstoff beschichteten Oberfläche ist bevorzugt ebenfalls ein granulatförmiges Material aufgebracht und wird von diesem Klebstoff an dieser Oberfläche gehalten.

Bei dieser beschriebenen Ausführungsform ist daher zweiseitig an dem Trägermaterial ein granulatförmiges Material aufgebracht. Auch das auf der zweiten Oberfläche aufgebrachte Material ist bevorzugt zur Absorption von Gasen geeignet und bestimmt. Vorteilhaft handelt es sich bei dem auf die zweite Oberfläche aufgebrachten Material um das gleiche Material, welches auch auf der ersten Oberfläche aufgebracht ist. Durch diese Vorgehensweise kann insbesondere eine sehr hohe Beladung mit dem granulatförmigen Material erreicht werden.

Denkbar wäre es jedoch auch, nur eine Oberfläche des Trägerelements mit Granulat zu beladen. Bei einem derart vorbereitetem Material könnte der Liner auf derjenigen Seite, welche der mit Granulat beschichteten Oberfläche gegenüberliegt beim Aufwickeln abgezogen werden. Dies könnte für zusätzliche Lagesicherung des Granulats und Stabilität des Dämpfungselements sorgen.

Bei einer weiteren vorteilhaften Ausführungsform handelt es sich bei dem granulatförmigen Material um ein Aktivkohlematerial.

Es wären jedoch auch andere granulatförmige Materialien denkbar, die zur Adsorption und/oder Absorption von Gasen geeignet sind, wie z. B. - insb. anorganische - Adsorbentien wie Zeolithe. Daneben kommen auch poröse Polymere in Betracht. Daneben wären neben Aktivkohle auch weitere Substanzen verwendbar wie etwa Ruß, Graphit und Aerogele, welche ebenfalls oberflächenaktiv sind.

Dabei kann bevorzugt dieses Aktivkohlematerial als eine Schicht auf der mit Klebstoff beschichteten Oberfläche aufgetragen sein. Bei einer weiteren vorteilhaften Ausführungsform ist lediglich eine Schicht des granulatförmigen Materials auf dem Trägerelement angeordnet. Auf diese Weise kann eine möglichst freie Zugänglichkeit dieses granulatförmigen Materials für gasförmige Medien und insbesondere Luft erreicht werden.

Bei einer weiteren vorteilhaften Ausführungsform besteht das Basismaterial aus einem Kunststoff. So kann beispielsweise als Basismaterial eine PP-Folie verwendet werden. Denkbar wäre jedoch auch ein textiles Basismaterial (Gelege/Gewirke) oder ein metallisches Basismaterial.

Bei einer weiteren Ausgestaltung ist das Trägerelement bzw. das Basismaterial luftundurchlässig. Es wäre jedoch auch denkbar, dass das Trägerelement luftdurchlässig ist, um so eine Querdurchströmung zu ermöglichen. Bei einer weiteren vorteilhaften Ausführungsform ist das Trägerelement flexibel und kann damit gefaltet und/oder insbesondere auch aufgerollt werden.

Bei einer weiteren vorteilhaften Ausführungsform weist das Basismaterial eine Dicke auf, die größer ist als 0,02 mm, bevorzugt größer als 0,04 mm. Bei einer weiteren vorteilhaften Ausführungsform weist das Basismaterial eine Dicke auf, die kleiner ist als 0,2 mm, bevorzugt kleiner als 0,1 mm und besonders bevorzugt kleiner als 0,08 mm. Die Anmelderin hat herausgefunden, dass diese genannten Dicken besonders gut geeignet sind, um einerseits eine günstige Beladung mit dem Granulat zu erreichen und um andererseits auch eine nötige Stabilität zu gewährleisten, die beispielsweise für das Aufrollen des Materials hilfreich ist.

Bei einer weiteren vorteilhaften Ausführungsform sind mehrere Abschnitte des Trägerelements in einer zu den Erstreckungsrichtungen senkrecht stehenden Richtung benachbart zueinander und insbesondere aneinander anliegend angeordnet. So ist es beispielsweise denkbar, dass das Material, d.h. das Trägerelement zu einer Rolle aufgerollt ist. Es wäre jedoch auch denkbar, dass das Material mehrfach gefaltet ist, sodass mehrere Oberflächen bzw. insbesondere mit dem Granulat beladene Oberflächen aneinander anliegen. Insbesondere eine Rolle des besagten Materials bietet den Vorteil einer sehr hohen möglichen Adsorption von Luft, insbesondere mit den genannten Ausdehnungen des Trägerelements und des granulatförmigen Materials. Auf diese Weise kann sich innerhalb eines Dämpfers bzw. einer Luftfeder eine sehr hohe Dämpfungswirkung ergeben.

Vorteilhaft weist die Absorptionseinrichtung bzw. das Dämpfungselement ein elastisches Element auf, wie beispielsweise einen Schaumstoff, der an einem vorgegebenen Abschnitt an dem Trägerelement und/oder auf dem Granulat bevorzugt fest angeordnet ist, um so mit diesem elastischen Schaumstoff das Dämpfungselement bzw. die Adsorptionseinrichtung beispielsweise in einem Dämpfer anordnen zu können. So wäre es beispielsweise möglich, dass am Außenumfang einer derartigen Rolle ein entsprechendes flexibles Material angeordnet ist, beispielsweise ringförmig, um so die gesamte Rolle in einen Dämpfer klemmen zu können. Bei diesem umgebenden Material kann es sich insbesondere aber nicht ausschließlich um einen (elastischen) Schaumstoff handeln. So könnte beispielsweise an einer äußeren Lage einer Rolle bzw. eines Wickels das elastische Element angeordnet sein. Bevorzugt kann es sich hierbei auch um einen imprägnierten Schaum handeln und insbesondere einen zur verzögerten Rückstellung imprägnierten Schaum, insbesondere PU - Weichschaum.

Die vorliegende Erfindung ist weiterhin auf ein bandartiges Material gerichtet, welches ein flaches Trägermaterial aufweist, welches sich in einer ersten Richtung und in einer zweiten zu der ersten Richtung senkrecht stehenden Richtung erstreckt, und welches eine erste Oberfläche und zweite Oberfläche aufweist, wobei die zweite Oberfläche der ersten Oberfläche gegenüberliegt und wobei diese Oberflächen jeweils wenigstens abschnittsweise mit einem Klebstoff beschichtet sind.

Erfindungsgemäß ist an diesen mit dem Klebstoff beschichteten Oberflächen ein granulatförmiges Material aufgebracht und wird von dem Klebstoff an den Oberfläche gehalten, wobei dieses granulatförmige Material zur Adsorption und/oder Absorption von Gasen geeignet und bestimmt ist.

Vorteilhaft ist an beiden Oberflächen ein entsprechender Klebstoff und auch ein entsprechendes granulatförmiges Material angeordnet. Bei einer weiteren bevorzugten Ausführungsform handelt weist dieses Trägerelement ein aus einem Kunststoff bestehendes Basiselement bzw. Substrat auf. Vorteilhaft ist das bandartige Material mehrlagig ausgebildet, wobei mehrere (mit Klebstoff und dem Granulat beladene) Lagen, wie oben beschrieben, aneinander bzw. übereinander angeordnet sind. Vorteilhaft ist das bandartige Material zu einer Rolle aufgewickelt. Besonders bevorzugt greifen in diesem aufgewickelten Zustand des bandartigen Materials die einzelnen Abschnitte des bandartigen Materials zumindest abschnittsweise ineinander. Besonders bevorzugt liegt eine Dicke einer Schicht des Bandes in dem aufgewickelten Zustand zwischen 1 mm und 5mm, bevorzugt zwischen 2mm und 4mm und besonders bevorzugt zwischen 2,5mm und 3,5mm

Besonders bevorzugt sind wenigstens zwei Abschnitte des Trägermaterials derart benachbart zueinander angeordnet, dass das an dem ersten Abschnitt angeordnete granulatförmige Material dem an dem zweiten Abschnitt angeordneten granulatformigen Material gegenüberliegt und bevorzugt ein (insbesondere direkter mechanischer) Kontakt zwischen dem an dem ersten Abschnitt angeordneten granulatförmigen Material und dem an dem zweiten Abschnitt angeordneten granulatförmigen Material besteht.

Dies bedeutet, dass die einzelnen Lagen, etwa bei einer rollenartigen Ausbildung, direkt nebeneinander angeordnet sind und insbesondere keine Trennlage zwischen einzelnen Lagen vorgesehen ist. Auf diese Weise kann der Luftaustausch mit dem granulatartigen Material weiter verbessert werden. Bevorzugt sind dabei wenigstens zwei Abschnitte des Trägerelements parallel zueinander angeordnet bzw. verlaufen parallel zueinander. Dabei können diese Verläufe auch (wie etwa bei einer Aufwicklung) gekrümmt sein.

Die vorliegende Erfindung ist weiterhin auf die Verwendung des hier beschriebenen bandartigen Materials für Luftfedereinrichtungen oder allgemein Gasfedereinrichtungen gerichtet. Weiterhin ist die vorliegende Erfindung auf eine Gasfedereinrichtung gerichtet. Diese Gasfedereinrichtung weist wenigstens eine Druckluftkammer mit einem veränderlichen Volumen auf, die bevorzugt an eine Kompressoreinheit mit oder ohne einen Druckluftspeicher angeschlossen ist. Bevorzugt weist die Gasfedereinrichtung auch ein Kolbenelement, welches gegenüber der Druckluftkammer beweglich ist und insbesondere in einer geradlinigen Richtung beweglich ist, auf.

Erfindungsgemäß weist ein Druckluftraum der Gasfedereinrichtung und/oder der Druckluftspeicher ein Dämpfungselement der oben beschriebenen Art auf. Vorteilhaft ist das Dämpfungselement dabei in einer vorgegebenen und insbesondere festen Position gegenüber dem Druckluftraum angeordnet. Besonders bevorzugt ist das Dämpfungselement dabei als Rolle ausgebildet. Bevorzugt ist weiterhin das Dämpfungselement mit einem insbesondere elastischen Befestigungselement in dem besagten Druckluftraum angeordnet.

Die vorliegende Erfindung ist weiterhin auf ein Verfahren zum Herstellen einer bandartigen Adsorptionseinrichtung und insbesondere eines Dämpfungselements gerichtet. Dabei wird ein bandartiges und wenigstens einseitiges mit einem Klebstoff beschichtetes Trägermaterial zur Verfügung gestellt und dieses entsprechendeTrägerelement wird in eine Ansammlung von granulatförmigen Materialien eingebracht oder auf dieser Ansammlung aufgebracht. Weiterhin wird dieses Trägerelement gegenüber der Ansammlung bewegt, sodass auf wenigstens einer mit dem Klebstoff beschichteten Oberfläche des Trägerelements eine Schicht aus dem Granulat entsteht. Vorteilhaft wird das granulatförmige Material in einem Behältnis, beispielsweise einem trogartigen Gebilde, aufbewahrt. Das Trägerelement wird beispielsweise durch dieses granulatartige Material hindurchgezogen.

Vorteilhaft wird das Trägerelement in einem Bereich durch das Behältnis hindurchgezogen, der innerhalb der Masse des granulatförmigen Materials liegt, sodass sowohl oberhalb, als auch unterhalb des Bandes granulatförmiges Material befindlich ist. Zu diesem Zweck kann beispielsweise ein Aufnahmebehältnis mit dem granulatförmigen Material zwei Öffnungen haben, wobei durch eine Öffnung der bandartige Träger zugeführt und durch die andere Öffnung abgeführt wird. Vorteilhaft wird der bandartige Träger gegenüber diesem Behältnis mit dem granulatförmigen Material bewegt und insbesondere entlang seiner ersten Erstreckungsrichtung bewegt.

Bei einer weiteren vorteilhaften Ausführungsform wird das Trägerelement von einem Vorrat, wie etwa einer Rolle, abgerollt. Dabei ist es möglich, dass eine (ebenfalls bevorzugt bandartige) Zwischenschicht bzw. ein Deckkörper (auch als Liner bezeichnet) zumindest abgezogen wird, sodass das bandartige Trägerelement an beiden Seiten (d.h. beiden Oberflächen) mit einem Klebstoff beschichtet ist (und damit auch auf beiden Seiten das granulatförmige Material anhaften kann). Auf diese Weise ist eine beidseitige Beschichtung bzw. Beladung des bandartigen Materials mit dem Granulat möglich.

Bei einem weiteren bevorzugten Verfahren wird das Trägerelement, nachdem es mit dem granulatförmigen Material beschichtet bzw. beladen wurde auf einer Rolle aufgerollt. Auf diese Weise entsteht eine Rolle mit beidseitigen Beschichtungen mit granutlatförmigen Material. Bevorzugt wäre es auch möglich zunächst breitere Rollen des Materials herzustellen und diese dann zu kürzeren Rollen zu schneiden.

Bei einem weiteren möglichen Verfahren wird das bandartige Material nach dem Aufbringen des granulatförmigen Materials erwärmt, um auf diese Weise den Halt des granulatförmigen Materials zu verbessern, beispielsweise indem der Klebstoff ausgehärtet wird.

Bei einem bevorzugten Verfahren wird das bandartige Material vor dem Aufbringen des granulatförmigen Materials erwärmt, insbesondere, um so den Kleber weicher und/oder fließfähiger zu machen und um so eine bessere Einbettung und/oder Haftung des Granulats zu erreichen.

Vorteilhaft wird das granulatförmige Material (insbesondere beidseitig) als lediglich eine Schicht auf dem bandartigen Trägerelement aufgebracht.

Bei einem weiteren bevorzugten Verfahren kann eine Bewegungsgeschwindigkeit des bandartigen Materials bzw. Trägerelements gegenüber dem granulatförmigen Material verändert werden, um auf diese Weise die Beschichtungsdichte zu verändern.

Bei einem weiteren bevorzugten Verfahren wird das Trägerelement nach dem Aufbringen des granulatförmigen Materials, (wobei so das Dämpfungsmaterial gebildet wurde), derart gefaltet und/oder gekrümmt, dass wenigstens zwei Abschnitte des Trägermaterials aneinander anliegen. Auf diese Weise berührt ein erster Abschnitt des Dämpfungsmaterials bzw.Dämpfungselements, der mit dem granulatförmigen Material beschichtet ist, einen weiteren Abschnitt des Dämpfungsmaterials mit dem granulatförmigen Material. Auf diese Weise kommt eine erste Schicht des granulatförmigen Materials an einer zweiten Schicht des granulatförmigen Materials zu liegen. Die einzelnen granulatförmigen Partikel können auf diese Weise ineinander greifen.

Bei einem weiteren bevorzugten Verfahren wird an dem mit dem Granulat beschichteten Trägerelement ein -insbesondere elastisches - Element aufgebracht und/oder befestigt, um das Trägerelement mit dem granulatförmigen Material in eine andere Vorrichtung, etwa eine Luftdämpferkonstruktion einpressen zu können. Vorteilhaft handelt es sich bei diesem weiteren Material um einen schaumstoffartigen Körper.

Weitere Vorteile und Ausführungsformen ergeben sich aus den beigefügten Zeichnungen. Darin zeigen:
- Fig. 1: ein erfindungsgemäßes bandartiges Material mit einer Beschichtung;
- Fig. 2: ein bandartiges zu einer Rolle aufgewickeltes Material;
- Fig. 3: eine Vorrichtung zum Herstellen des beschichteten bandartigen Materials, und;
- Fig. 4: eine Luftfedereinrichtung mit einem erfindungsgemäßen Dämpfungselement.

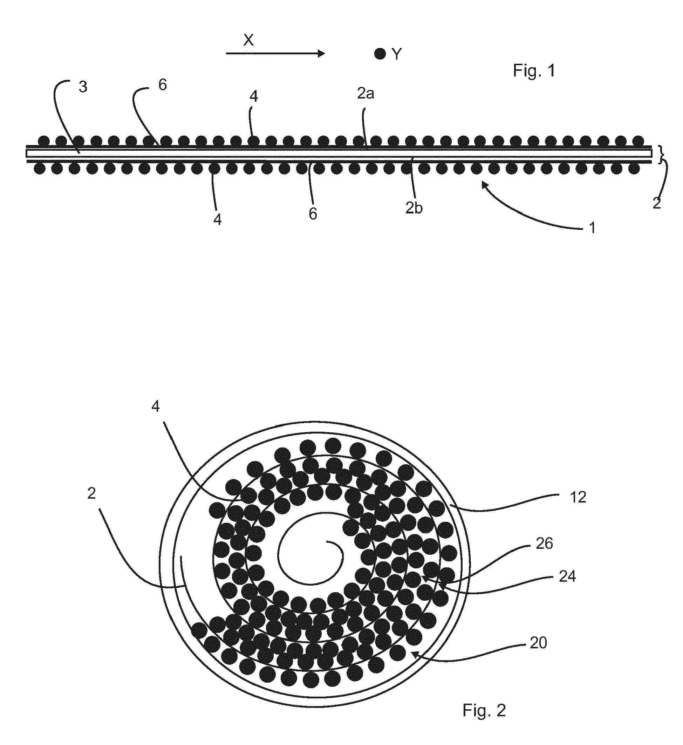

Fig. 1 zeigt eine schematische Darstellung eines bandartigen Materials bzw. Dämpfungselements 1. Dieses Dämpfungsmaterial bzw. Dämpfungselement 1 weist ein Trägerelement 2 auf, welches hier ebenfalls bandartig ausgebildet ist. Das Trägerelement bildet eine erste Oberfläche 2a und eine zweite dieser ersten Oberfläche 2a gegenüberliegende Oberfläche 2b aus. Dabei ist eine Dicke des bandartigen Trägerelements wesentlich geringer als die Erstreckungsrichtungen des Trägerelements in der Richtung X und der Richtung Y, wobei die Richtung Y hier senkrecht zu der Figurenebene steht.

An dem Basismaterial bzw. Substrat 3 sind beidseitig Klebeschichten 6 aufgebracht. Damit kann es sich beispielsweise bei dem bandartigen Trägerelement 2 um ein doppelseitiges Klebeband handeln. Mittels der Klebeschichten sind an dem Trägerelement 2 ebenfalls zweiseitig granulatförmige Körper, insbesondere Aktivkohlekörper 4, aufgetragen. Dabei sind die Aktivkohlekörper hier nur als eine Schicht aufgetragen, da eine weitere von dem Klebstoff nicht gehalten werden würde und so auch die aktive Fläche (insbesondere eine Adsorptionsfläche) des granulatförmigen Materials erhöht werden kann. In der Figur ist zur besseren Darstellung die Dicke des Trägers gegenüber dem Durchmesser des granulatförmigen Materials zu groß dargestellt.

Fig. 2 zeigt eine Darstellung, bei der das Trägerelement 2 mit dem daran angeordneten granulatförmigen Material 4 zu einer Rolle 20 aufgerollt ist. Man erkennt hier (schematisch), dass das granulatartige Material ineinander greift. Auf diese Weise kann eine sehr hohe Wirkoberfläche erreicht werden. Dieser gesamte Körper 1 kann beispielsweise in ein Dämpfungsfederelement eingesetzt werden, um so als Adsorptionseinrichtung zu dienen.

An dem Außenumfang der so entstehenden Rolle kann wiederum ein elastisches Spannelement 12, wie etwa ein elastischer Schaumstoff angebracht werden. Mittels dieses Schaumstoffes kann die Adsorptionseinrichtung bzw. das Dämpferelement in eine Gasfeder eingedrückt und dort in Position gehalten werden. Die Breiten der Absorptionseinrichtung 1 (in der Richtung Y) können schwanken, und sich insbesondere nach der Ausgestaltung des jeweiligen Dämpfers richten. Vorteilhaft liegen die Breiten dieses Materials zwischen 2 cm und 200 cm, bevorzugt zwischen 2 cm und 100 cm, bevorzugt zwischen 2 cm und 50 cm und besonders bevorzugt zwischen 2 cm und 30 cm und besonders bevorzugt zwischen 2 cm und 10 cm.

Die Bezugszeichen 24 und 26 beziehen sich auf zwei Abschnitte des Trägerelements 2, welche benachbart zueinander angeordnet sind. Das granulatförmige Material auf dem einen Abschnitt 24 kontaktiert dabei direkt das granulatförmige Material auf dem anderen Abschnitt 26. Insgesamt ist jedoch das Trägerelement 2 bevorzugt einteilig ausgebildet. Zwischen den Abschnitten 24 und 26 ist dabei bevorzugt keine weitere Trennschicht angeordnet so dass Luft sich schnell in bzw. an dem granulatförmigen Material verteilen kann.

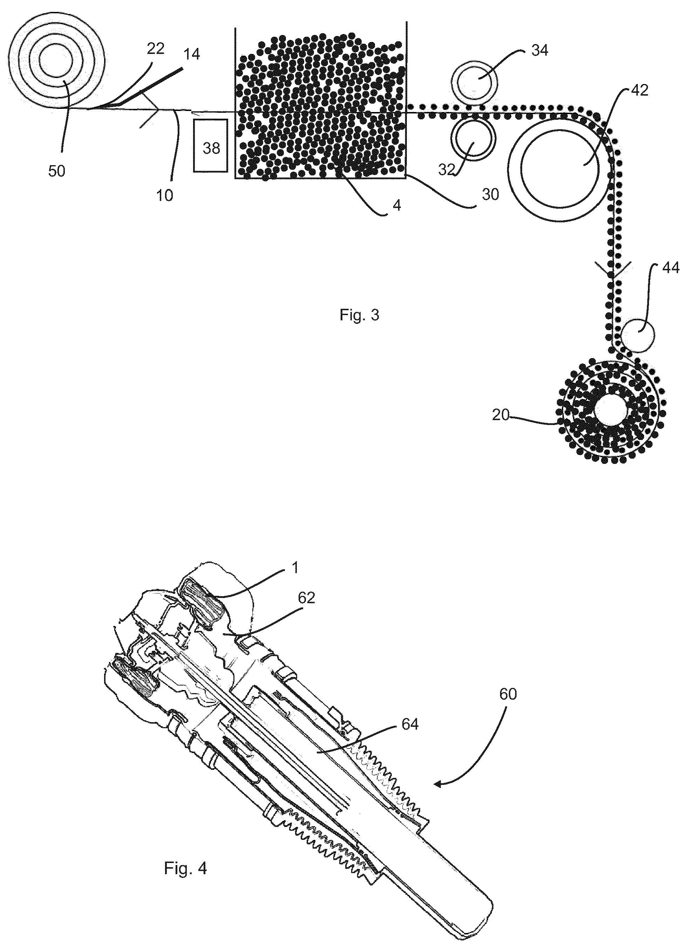

Fig. 3 zeigt eine Vorrichtung zur Herstellung des erfindungsgemäßen Dämpfungselements. Dabei ist eine Bandrolle 50 vorgesehen, welche ein doppelseitig beschichtetes Klebeband aufweist. Über eine Trenneinrichtung 14 wird ein Liner 22 von diesem Klebeband abgezogen. Anders als in Fig. 3 gezeigt, wäre es auch denkbar, dass das Band über einen scharfen Knick bzw. eine scharfe Umlenkung geführt wird, um so den Liner 22 abzulösen. Das Band 10 wird einem Behältnis 30 zugeführt, in dem sich das granulatartige Material 4 befindet. Durch dieses Behältnis 30 wird das Band hindurchgezogen. Wie in Fig. 3 gezeigt, ist es möglich und bevorzugt, dass das Trägerelement unmittelbar nach dem Abtrennen des Liners dem Behältnis zugeführt wird, da entsprechende Umlenkrollen verkleben könnten. Bevorzugt wird daher das Trägerelement ausgehend von der Trenneinrichtung unmittelbar und insbesondere ohne Umlenkrollen dem Behältnis 30 zugeführt.

Wie in Fig. 3 gezeigt ist es dabei möglich, dass das Trägerelement 2 unmittelbar, beispielsweise in einem mittleren Bereich, durch das granulatartige Material 4 hindurchgezogen wird. Es wäre jedoch auch möglich, dass das Trägerelement an einer Oberfläche über einen Oberflächenbereich des granulatartigen Materials gezogen wird und gleichzeitig, beispielsweise von oben her, mit granulatartigem Material zusätzlich bestreut wird.

Weiterhin wäre es auch denkbar, dass das granulatartige Material 4 innerhalb des Behältnisses 30 bewegt wird, beispielsweise indem das ganze Behältnis 30 vibriert wird oder indem beispielsweise mittels Luft eine Verwirbelung des granulatartigen Materials bewirkt wird. Aus dem Behältnis 30 tritt das Trägerband aus und ist nunmehr sowohl oberseitig als auch unterseitig mit dem granulatartigen Material beschichtet. Die Bezugszeichen 32 und 34 beziehen sich auf Andrückrollen, welche das granulatartige Material an dem Träger andrücken. Diese Rollen könnten jedoch auch innerhalb des Behältnisses 30 ausgebildet sein. Auch wäre es denkbar, dass diese Rollen direkt auch den Ausgang aus dem Behältnis 30 bilden.

Das Bezugszeichen 38 bezieht sich auf eine Erwärmungseinrichtung, welche beispielsweise zu einem Erwärmen des Klebstoffes dienen kann. Über eine Umlenkrolle 42 und eine weitere Rolle 44 wird das Trägerband, welches nunmehr mit dem Granulat 4 beschichtet ist, aufgewickelt bzw. zu einer Rolle 20 aufgerollt. Im Anschluss wäre es noch möglich, dass derartige Rollen zugeschnitten werden, beispielsweise auf gewünschte Breiten.

Daneben wäre es auch möglich, dass die Rolle 20 mit einem elastischen Material, etwa einem Schaumstoff versehen wird, sodass die elastische Rolle auch in eine Dämpfereinrichtung eingeklemmt werden kann. So könnte die Rolle mit dem elastischen Material zunächst in eine Vorspanneinrichtung eingebracht werden, welche einen kleineren Querschnitt aufweist als die Kammer des Dämpfers. Wird diese Vorspanneinrichtung entfernt, dehnt sich das elastische Material aus und erzeugt so die Klemmwirkung. Dies kann insbesondere dadurch erfolgen, dass eine Vorkomprimierung der Schaumlage gelöst wird. Es wäre auch möglich, dass das Band in aufeinanderfolgenden Schritten an den beiden Oberflächen mit dem granulatartigen Material beladen wird. So könnte es beispielsweise zunächst nur an der oberen (ersten) Oberfläche beaufschlagt werden, anschließend gewendet werden und in diesem gewendeten Zustand wieder an der oberen (jedoch nunmehr zweiten) Oberfläche beschichtet werden. Auf diese Weise könnte die Aufbringungsdichte des granulatförmigen Materials auf das jeweilige Trägerelement (bzw. für die jeweilige Anwendung) besser beeinflusst werden.

Fig. 4 zeigt eine vereinfachte Darstellung einer Luftfedereinrichtung 60. Diese weist einen Druckraum 62 auf, sowie eine Kolbeneinrichtung 64, welche gegenüber diesem Druckraum 62 bewegbar ist. Innerhalb des Druckraums 62 ist ein erfindungsgemäßes Dämpfungselement 1 angeordnet und bevorzugt fest angeordnet. Das Dämpfungselement ist hier als Rolle ausgebildet, welche in den Druckraum 62 eingepresst sein kann.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Dämpfungselement, Dämpfungnsmaterial
- 2: Trägerelement, bandartiger Träger
- 3: Basismaterial, Substrat
- 2a: Oberfläche
- 2b: Oberfläche
- 4: granulatartiges Material
- 6: Klebeschichten
- 10: Band (vom Liner befreites Trägerelement)
- 12: Spannelement
- 14: Trenneinrichtung
- 20: Rolle, Wickel
- 22: Liner
- 30: Behältnis
- 32,34: Andrückrollen
- 38: Erwärmungseinrichtung
- 42: Umlenkrolle
- 44: Rolle
- 50: Bandrolle
- 60: Gasfedereinrichtung
- 62: Druckraum
- 64: Kolbeneinrichtung
- X,Y: Richtungen

## Patentansprüche

1. Dämpfungselement insbesondere für Gasfedern, mit einem flachen Trägerelement (2), welches sich in einer ersten Richtung (X) und in einer zweiten zu der ersten Richtung (X) senkrecht stehenden Richtung (Y) erstreckt und welches eine erste Oberfläche (2a) und ein zweite Oberfläche (2b) aufweist, wobei die zweite Oberfläche (2b) der ersten Oberfläche (2a) gegenüberliegt, wobei wenigstens eine Oberfläche (2a, 2b) wenigstens abschnittsweise mit einem Klebstoff beschichtet ist,
**dadurch gekennzeichnet, dass**
an dieser wenigstens einen mit dem Klebstoff beschichteten Oberfläche (2a, 2b) ein granulatförmiges Material (4) aufgebracht und von dem Klebstoff an der Oberfläche gehalten ist, wobei dieses granulatförmige Material (4) zur Adsorption und/oder Absorption von Gasen geeignet und bestimmt ist.

2. Dämpfungselement (1) nach Anspruch 1,
**dadurch gekennzeichnet, dass**
auch die andere Oberfläche mit wenigstens abschnittsweise mit einem Klebstoff beschichtet ist und an dieser mit dem Klebstoff beschichteten Oberfläche ein granulatförmiges Material (4) aufgebracht und von dem Klebstoff an dieser Oberfläche gehalten ist.

3. Dämpfungselement (1) nach wenigstens einem der vorangegangenen Ansprüche,
**dadurch gekennzeichnet, dass**
das granulatförmige Material (4) ein Aktivkohlematerial (4) ist.

4. Dämpfungselement (1) nach wenigstens einem der vorangegangenen Ansprüche,
**dadurch gekennzeichnet, dass**
ein Basismaterial (3) des Trägerelements (2) aus einem Kunststoff besteht.

5. Dämpfungselement (1) nach wenigstens einem der vorangegangenen Ansprüche,
**dadurch gekennzeichnet, dass**
das Trägerelement (2) eine Dicke aufweist, die größer ist als 0,05mm, bevorzugt größer als 0,08mm, bevorzugt größer als 0,1 mm, bevorzugt größer als 0,12mm und/oder das Trägerelement (2) eine Dicke aufweist, die kleiner ist als 0,4mm, bevorzugt kleiner als 0,3mm, bevorzugt kleiner als 0,2mm und besonders bevorzugt kleiner als 0,18mm.

6. Dämpfungselement (1) nach wenigstens einem der vorangegangenen Ansprüche,
**dadurch gekennzeichnet, dass**
mehrere Abschnitte des Trägerelements (2) in einer zu den Erstreckungsrichtungen (X,Y) senkrecht stehenden Richtung benachbart zueinander und insbesondere aneinander anliegend angeordnet sind.

7. Dämpfungselement (1) nach wenigstens einem der vorangegangenen Ansprüche,
**dadurch gekennzeichnet, dass**
das Dämpfungselement ein elastisches Element (12) aufweist, das an einem vorgegebenen Abschnitt an dem Trägerelement (2) und/oder auf dem Granulat (4) bevorzugt fest angeordnet ist.

8. Bandartiges Material (1) mit einem flachen Trägerelement (2), welches sich in einer ersten Richtung (X) und in einer zweiten zu der ersten Richtung (X) senkrecht stehenden Richtung (Y) erstreckt und welches eine erste Oberfläche (2a) und ein zweite Oberfläche (2b) aufweist, wobei die zweite Oberfläche (2b) der ersten Oberfläche (2a) gegenüberliegt, wobei die erste Oberfläche und die zweite Oberfläche (2a, 2b) wenigstens abschnittsweise mit einem Klebstoff beschichtet sind,
**dadurch gekennzeichnet, dass**
an diesen mit dem Klebstoff beschichteten Oberflächen (2a, 2b) ein granulatförmiges Material (4) aufgebracht und von dem Klebstoff an den Oberfläche gehalten ist, wobei dieses granulatförmige Material (4) zur Adsorption und/oder Absorption von Gasen geeignet und bestimmt ist.

9. Bandartiges Material (1) nach Anspruch 8,
**dadurch gekennzeichnet, dass**
wenigstens zwei Abschnitte (24, 26) des Trägerelements (2) derart benachbart zueinander angeordnet sind, dass das an dem ersten Abschnitt (24) angeordnete granulatförmige Material (4) dem an dem zweiten Abschnitt (26) angeordneten granulatformigen Material (4) gegenüberliegt und bevorzugt ein Kontakt zwischen dem an dem ersten Abschnitt (24) angeordneten granulatförmigen Material (4) und dem an dem zweiten Abschnitt (26) angeordneten granulatförmigen Material (4) besteht.

10. Verfahren zum Herstellen eines bandartigen Dämpfungselements (1), wobei ein bandartiges und wenigstens einseitig mit einem Klebstoff beschichtetes Trägerelement (2) zur Verfügung gestellt wird und dieses Trägerelement (2) in eine Ansammlung von granulatformigem Material (4) eingebracht und/oder auf dieser Ansammlung aufgebracht wird und wobei dieses Trägerelement (2) gegenüber der Ansammlung bewegt wird, so dass auf wenigstens einer mit dem Klebstoff beschichteten Oberfläche (2a, 2b) des Trägerelements (2) eine Schicht aus dem granulatförmigen Material (4) entsteht.

11. Verfahren nach Anspruch 10,
**dadurch gekennzeichnet, dass**
das Trägermaterial nach dem Aufbringen des granulatförmigen Materials derart gefaltet und/oder gekrümmt wird, dass wenigstens zwei Abschnitte des Trägermaterials aneinander anliegen.
